(19) Europäisches Patentamt
European Patent Office
Office européen des brevets

(11) **EP 2 677 012 A2**

(12) **EUROPÄISCHE PATENTANMELDUNG**

(43) Veröffentlichungstag:
25.12.2013 Patentblatt 2013/52

(51) Int Cl.:
*C09J 7/00* (2006.01)     *C09J 7/02* (2006.01)

(21) Anmeldenummer: 13171464.4

(22) Anmeldetag: 11.06.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 21.06.2012 DE 102012210511
27.05.2013 DE 102013209827

(71) Anmelder: Tesa SE
20253 Hamburg (DE)

(72) Erfinder:
• Seitz, Karsten, Dr.
21614 Buxtehude (DE)
• Kipke, Jennifer, Dr.
20257 Hamburg (DE)
• Prenzel, Alexander, Dr.
20259 Hamburg (DE)
• Sonnenberg, Lars
22455 Hamburg (DE)

(54) **Hitzebeständiges Klebeband**

(57) Es sollen verbesserte, insbesondere stabilere Verklebungen beziehungsweise Abdichtungen von Substraten mit unterschiedlichem Verhalten bei thermischer Beanspruchung erreicht werden. Dies gelingt durch Zurverfügungstellung eines Klebebandes mit einer Dicke von mindestens 150 $\mu$m, das nach Lagerung bei 120 - 150°C über 60 bis 210 Tage eine Dehnbarkeit in Maschinenrichtung auf mindestens das Dreifache seiner ursprünglichen Ausdehnung aufweist.

EP 2 677 012 A2

**Beschreibung**

Die Erfindung betrifft das technische Gebiet der Klebebänder, wie sie zum temporären oder langfristigen Verbinden von Substraten, beispielsweise von Bauteilen, verwendet werden. Insbesondere werden Klebebänder vorgeschlagen, die sich zum permanenten Verbinden von Substraten mit unterschiedlichem thermischem Verhalten eignen.

Für diverse Anwendungsgebiete, beispielsweise im Bausektor, in der industriellen Fertigung von technischen Produkten oder für Montagezwecke, werden zunehmend dicke, stark klebende Klebebänder (zum Beispiel so genannte "Montageklebebänder") benötigt. Da die Verklebungen oder Abdichtungen häufig im Außenbereich stattfinden und die verklebten Produkte somit den Witterungseinflüssen ausgesetzt sind, sind die Erwartungen an die Eigenschaften derartiger Klebebänder hoch: So soll die Verklebung stark, dauerhaft und witterungsbeständig sein und ferner häufig eine hohe Feuchtigkeits-, Wärme- und Feuchtwärmebeständigkeit aufweisen. Zusätzlich sollten die Klebebänder Unebenheiten in der Verklebungsfuge oder auf den zu verklebenden Untergründen ausgleichen können, und zunehmend wird auch für dicke Klebebänder eine hohe Transparenz gewünscht, etwa im Bereich der Verklebung von transparenten Materialien wie Gläsern oder bestimmten Kunststoffen.

Die Klebebänder, die für derartige Zwecke eingesetzt werden, sind für gewöhnlich mit Klebemassen ausgerüstet, bei denen die klebtechnischen Eigenschaften sehr gut aufeinander abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebemasse, die die Leistung des Klebebandes beeinflussen, auf die einzelnen Eigenschaften häufig gegenläufige Auswirkungen haben, ist die Abstimmung in der Regel schwierig, und häufig müssen Kompromisse im Ergebnis hingenommen werden.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des betreffenden Stoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Um ein Abfließen (ein Herunterlaufen) der Haftklebemassen vom Substrat zu verhindern und eine genügende Stabilität der Haftklebemasse im Klebeverbund zu garantieren, ist also eine hinreichende Kohäsion der Haftklebemassen erforderlich. Für gute Adhäsionseigenschaften müssen die Haftklebemassen aber andererseits in der Lage sein, auf das Substrat aufzufließen und eine hinreichende Benetzung der Substratoberfläche zu garantieren.

Um Brüche innerhalb der Verklebungsfuge (innerhalb der Haftklebemassenschicht) zu vermeiden, ist zudem eine gewisse Elastizität der Haftklebemasse erforderlich. Dieses Erfordernis wird insbesondere dann bedeutsam, wenn die zu verklebenden Substrate ein unterschiedliches Verhalten bei Temperatureinwirkung zeigen, das sich beispielsweise in unterschiedlichen thermischen Ausdehnungskoeffizienten äußern kann. In einem solchen Fall sind Klebebänder gefragt, welche die resultierenden Spannungen in der Klebefuge ausgleichen und dennoch ihre klebenden Eigenschaften beibehalten können.

Im Stand der Technik sind Klebebänder beschrieben, mit denen versucht wurde, einem derartigen Anforderungsprofil zu entsprechen. WO 2006/027387 A1 betrifft beispielsweise ein Verfahren zur Herstellung eines Klebebandes mit ein- oder beidseitiger vernetzter Acrylatschmelzhaftkleberschicht, bei welchem in der Schmelze zu einem primäre Hydroxygruppen aufweisenden Acrylatcopolymer ein thermischer Vernetzer zugesetzt wird und das Polyacrylat nach Aufbringung auf eine bahnförmige Schicht homogen vernetzt wird.

EP 1 978 069 A1 beschreibt ein Vernetzer-Beschleuniger-System für die thermische Vernetzung von Polyacrylaten, wobei die Vernetzung über Epoxidgruppen erfolgen soll. Die Schrift stellt im Wesentlichen auf Vorteile bei der Verarbeitung von Polyacrylatmassen aus der Schmelze ab.

Zunehmend rücken Anwendungen in den Blickpunkt, in denen die Klebefugen oder abgedichteten Teile über längere Zeit einer erheblichen thermischen Beanspruchung ausgesetzt sind. Es besteht ein anhaltender Bedarf an Klebebändern, die auch unter diesen Bedingungen dauerhaft stabile Verklebungen ermöglichen.

Aufgabe der Erfindung ist es daher, ein Klebeband zur Verfügung zu stellen, das auch bei starker und anhaltender thermischer Beanspruchung dauerhaft Substrate miteinander verbindet, die sich unter Temperatureinwirkung unterschiedlich verhalten und/oder das im Falle einer Verwendung als Dichtmaterial auch unter starker Hitzeeinwirkung und damit verbundener Änderung der Ausdehnung der abzudichtenden Stelle diese zuverlässig weiter abdichtet.

Die Aufgabe wird durch ein Klebeband gelöst, das hervorragende elastische Eigenschaften nach längerer Lagerung bei 120° - 150°C aufweist. Ein erster Gegenstand der Erfindung ist somit ein Klebeband mit einer Dicke von 150 $\mu$m, das dadurch gekennzeichnet ist, dass es nach Lagerung bei 120 - 150°C über 60 bis 210 Tage eine Dehnbarkeit in Maschinenrichtung auf mindestens das Dreifache seiner ursprünglichen Ausdehnung aufweist.

Unter einem "Klebeband" wird ein flächiges Gebilde verstanden, das entweder ein zumindest einseitig mit Haftklebstoff beschichtetes Trägermaterial umfasst oder aus einer oder mehreren direkt aufeinander aufgebrachten Haftklebstoffschichten besteht (Transferklebeband) und das zumindest an einer seiner beiden Hauptflächen haftklebrige Eigenschaften aufweist. Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen. Unter "haftklebrig" wird verstanden, dass das betreffende Klebeband bereits nach Anwendung von leichtem Druck auf den meisten Oberflächen haftet, ohne dass eine Aktivierung, beispielsweise durch Anfeuchten oder Erwärmen, nötig wäre.

Der Begriff "Trägermaterial" umfasst hier jede(s) denkbare Schicht oder Gebilde aus mehreren Schichten, die/das in dem Klebeband noch mit zumindest einer haftklebrigen Schicht beschichtet ist.

Bei dem erfindungsgemäßen Klebeband kann es sich also sowohl um ein einschichtiges als auch um ein mehrschichtiges Klebeband handeln. Erfindungsgemäße Klebebänder können beispielsweise gestaltet sein als

- einschichtige, beidseitig selbstklebende Klebebänder - sogenannte "Transfertapes" - aus einer einzigen Schicht einer geschäumten Selbstklebemasse;
- einseitig selbstklebend ausgerüstete Klebebänder - nachfolgend auch "einseitige Klebebänder" genannt - bei denen die Selbstklebemassenschicht eine geschäumte Schicht ist, zum Beispiel Zweischichtsysteme aus einer geschäumten Selbstklebemasse und einer hitzeaktivierbaren Klebemasse oder einer geschäumten oder nicht geschäumten Trägerschicht;
- beidseitig selbstklebend ausgerüstete Klebebänder - nachfolgend auch "doppelseitige Klebebänder" genannt - bei denen eine, insbesondere beide Selbstklebemassenschichten eine geschäumte Polymermasse ist beziehungsweise sind und/oder bei denen die Trägerschicht eine geschäumte Polymerschicht ist;
- doppelseitige Klebebänder mit einer hitzeaktivierbaren Klebeschicht auf einer der Klebebandseiten und einer Selbstklebemassenschicht auf der anderen Klebebandseite, bei denen die Trägerschicht und/oder die Selbstklebemassenschicht (eine) geschäumte Polymermasse(n) ist/sind;
- doppelseitige Klebebänder mit einer hitzeaktivierbaren Klebeschicht auf beiden Klebebandseiten, bei denen die Trägerschicht eine geschäumte Polymermasse ist.

Die erfindungsgemäßen Klebebänder können einen symmetrischen oder einen asymmetrischen Produktaufbau aufweisen. In einer bevorzugten Ausführungsform der Erfindung besteht das Klebeband aus einem viskoelastischen, geschäumten Träger, der somit selbst haftklebrige Eigenschaften aufweist. In einer weiteren Ausführungsform ist dieser Träger einseitig direkt mit einer Haftklebemasse beschichtet. Alternative Ausführungsformen sehen vor, dass der Träger beidseitig direkt mit Haftklebemasse beschichtet ist, wobei die beiden Haftklebemassen gleich oder voneinander verschieden sein können. In einer weiteren Ausführungsform ist zwischen dem viskoelastischen Träger und der Haftklebemasse beziehungsweise den Haftklebemassen mindestens eine, bevorzugt genau eine, zusätzliche Schicht enthalten. Bei dieser zusätzlichen Schicht kann es sich beispielsweise um eine Primerschicht handeln.

Der Begriff "viskoelastisch" wird dabei gemäß der Definition von Chang in "Handbook of Pressure-Sensitive Adhesives and Products - Fundamentals of pressure sensitivity, Edited by I. Benedek und M. M. Feldstein, 2009, CRC Press, Taylor & Francis Group", dort Kapitel 5, insbesondere Figure 5.7, "Transition-flow region, General purpose PSA", und Figure 5.13, "Dahlquist contact criteria", verstanden.

Bevorzugt beträgt die Dicke eines erfindungsgemäßen Klebebandes 20 $\mu$m bis 8000 $\mu$m, stärker bevorzugt 30 $\mu$m bis 7000 $\mu$m, insbesondere 70 $\mu$m bis 6000 $\mu$m, beispielsweise 100 $\mu$m bis 5500 $\mu$m und ganz besonders bevorzugt 120 $\mu$m bis 5200 $\mu$m. Insbesondere bevorzugt beträgt die Gesamtdicke des erfindungsgemäßen Klebebandes 200 bis 5500 $\mu$m. Besonders bevorzugt beträgt die Dicke eines erfindungsgemäßen einschichtigen Klebebandes 30 $\mu$m bis 1300 $\mu$m, insbesondere 200 $\mu$m bis 1200 $\mu$m, und die Dicke eines erfindungsgemäßen mehrschichtigen, insbesondere dreischichtigen, Klebebandes 80 $\mu$m bis 8000 $\mu$m, insbesondere 200 $\mu$m bis 5500 $\mu$m. Ein auf dem Klebeband möglicherweise ein- oder beidseitig aufliegender Releaseliner gehört erfindungsgemäß nicht zu dem Klebeband und findet somit auch keine Berücksichtigung bei der Ermittlung der Dicke des Klebebandes.

Unter der "Dicke" des Klebebandes wird erfindungsgemäß die Ausdehnung des betreffenden Klebebandes entlang der z-Ordinate eines gedachten Koordinatensystems verstanden, bei dem die durch die Maschinenrichtung und die Querrichtung zur Maschinenrichtung aufgespannte Ebene die x-y-Ebene bildet. Erfindungsgemäß wird die Dicke durch Messung an mindestens fünf verschiedenen Stellen der betreffenden Schicht beziehungsweise Phase und anschließende Bildung des arithmetischen Mittels aus den erhaltenen Messergebnissen ermittelt. Die Dicke des erfindungsgemäßen Klebebandes wird gemäß ISO 1923 bestimmt.

Das erfindungsgemäße Klebeband umfasst bevorzugt mindestens ein thermisch vernetztes Polymer. Überraschend haben sich Klebebänder auf Basis thermisch vernetzter Polymere als thermisch stabiler gegenüber Klebebändern auf Basis UVvernetzter Polymere herausgestellt. Dies äußert sich insbesondere in einer relativ geringeren Abnahme der Zugfestigkeit nach längerer Einwirkung hoher Temperaturen, die sogar bei dreischichtigen Produkten ohne Vermittler zwischen Kern und Haftklebemasse beobachtet wurde.

Bevorzugt umfasst das erfindungsgemäße Klebeband mindestens eine geschäumte Schicht.

Als Basispolymere für die geschäumte Schicht eignen sich grundsätzlich alle dem Fachmann bekannten thermisch vernetzbaren und thermoplastisch verarbeitbaren Polymere. Bevorzugt ist mindestens ein Basispolymer der geschäumten Schicht thermisch vernetzbar. Unter "Basispolymer" wird ein Polymer verstanden, das zu einem Anteil von mindestens 30 Gew.-%, bezogen auf die Gesamtheit der in der betreffenden Schicht befindlichen Polymere, vorliegt. Besonders bevorzugt ist mindestens ein Basispolymer der geschäumten Schicht ausgewählt aus der Gruppe bestehend aus Poly(meth)acrylaten, Naturkautschuk, Synthesekautschuk, Vinylaromatenblockcopolymeren, insbesondere Styrolblockcopolymeren, Ethylenvinylacetaten (EVA), Silikonkautschuk, Polyvinylethern, Polyurethanen sowie Mischungen von zwei oder mehreren der genannten Polymere. Ganz besonders bevorzugt sind alle Basispolymere der geschäumten Schicht ausgewählt aus der Gruppe bestehend aus Poly(meth)acrylaten, Naturkautschuken, Synthesekautschuken, Vinylaromatenblockcopolymeren, insbesondere Styrolblockcopolymeren, Ethylenvinylacetaten (EVA), Silikonkautschuken, Polyvinylethern, Polyurethanen sowie Mischungen von zwei oder mehreren der genannten Polymere.

Bevorzugt umfasst das erfindungsgemäße Klebeband mindestens eine Haftklebeschicht, die mindestens ein Polymer enthält, das ausgewählt ist aus der Gruppe bestehend aus Poly(meth)acrylaten, Synthesekautschuken, Vinylaromatenblockcopolymeren, insbesondere Styrolblockcopolymeren, Polyolefinen und Mischungen aus zwei oder mehreren der vorstehenden Polymere. Die Haftklebeschicht kann mit der geschäumten Schicht identisch sein, kann jedoch auch als eigenständige Schicht im erfindungsgemäßen Klebeband vorliegen.

Sehr bevorzugt ist mindestens ein Basispolymer der geschäumten Schicht ein Poly(meth)acrylat. Ebenfalls sehr bevorzugt umfasst das erfindungsgemäße Klebeband mindestens eine Haftklebeschicht, die mindestens ein Poly(meth)acrylat enthält. Insbesondere sind alle Basispolymere der geschäumten Schicht Poly(meth)acrylate. Ebenfalls insbesondere enthalten alle Haftklebeschichten des erfindungsgemäßen Klebebandes ein oder mehrere Poly(meth)acrylat(e) als Hauptbestandteil. "Hauptbestandteil" bedeutet erfindungsgemäß, dass der betreffende Bestandteil mindestens 80 Gew.-% der betreffenden Schicht ausmacht.

Unter "Poly(meth)acrylaten" werden Polymere verstanden, deren Monomerbasis zu mindestens 60 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 50 Gew.-%, bezogen auf die gesamte Monomerbasis des betreffenden Polymers, enthalten sind. Insbesondere wird unter einem "Poly(meth)acrylat" ein Polymerisat verstanden, welches durch radikalische Polymerisation von Acryl- und/oder Methacrylmonomeren sowie gegebenenfalls weiteren, copolymerisierbaren Monomeren erhältlich ist.

Vorzugsweise sind die Poly(meth)acrylate der Erfindung erhältlich durch zumindest anteiliges Einpolymerisieren von funktionellen, mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Die Eigenschaften des betreffenden Poly(meth)acrylats (Haftklebemasse, Heißsiegelmasse, viskoelastisches nichtklebriges Material und dergleichen) lassen sich insbesondere über eine Variation der Glasübergangstemperatur des Polymers durch unterschiedliche Gewichtsanteile der einzelnen Monomere beeinflussen.

Für rein kristalline Systeme gibt es am Schmelzpunkt $T_S$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente.

Der Übergang vom Schmelzpunkt $T_S$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführung bei der Angabe des Glaspunktes der Schmelzpunkt mit umfasst, es wird also unter dem Glasübergangspunkt (oder gleichbedeutend auch unter der Glasübergangstemperatur) auch der Schmelzpunkt für die entsprechenden "schmelzenden" Systeme verstanden. Die Angaben der Glasübergangstemperaturen beziehen sich auf die Bestimmung mittels dynamisch mechanischer Analyse (DMA) bei geringen Frequenzen.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorzugsweise derart gewählt, dass sich nach einer Gleichung (G1) in Analogie zur Fox-Gleichung (vgl. T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Das beziehungsweise die Poly(meth)acrylat(e) der Erfindung können vorzugsweise auf die folgende Monomerzusammensetzung zurückgeführt werden:

a) Acrylsäureester und/oder Methacrylsäureester der folgenden Formel $CH_2 = C(R^I)(COOR^{II})$

wobei $R^I$ = H oder $CH_3$ und R" ein Alkylrest mit 4 bis 14 C-Atomen ist,

b) olefinisch ungesättigte Monomere mit funktionellen Gruppen der für eine Reaktivität mit Epoxidgruppen bereits definierten Art,

c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) bevorzugt derart gewählt, dass das Polymerisationsprodukt eine Glastemperatur ≤ 15 °C (DMA bei geringen Frequenzen) aufweist.

Es ist insbesondere zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Soll das Polyacrylat als Heißschmelzkleber, also als ein Material, welches erst durch Erwärmen haftklebrig wird, verwendet werden, werden die Anteile der Komponenten (a), (b), und (c) bevorzugt derart gewählt, dass das Copolymer eine Glasübergangstemperatur ($T_G$) zwischen 15 °C und 100 °C aufweist, bevorzugt zwischen 30 °C und 80 °C, besonders bevorzugt zwischen 40 °C und 60 °C.

Ein viskoelastisches Material, das typischerweise beidseitig mit haftklebrigen Schichten kaschiert sein kann, hat insbesondere eine Glasübergangstemperatur ($T_G$) zwischen - 50 °C bis +100 °C, bevorzugt zwischen -20 °C bis + 60°C, besonders bevorzugt 0°C bis 40°C. Die Anteile der Komponenten (a), (b), und (c) sind auch hier entsprechend zu wählen.

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigte Isomere, wie zum Beispiel 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:

Methylacrylat, Ethylacrylat, Propylacrylat, Methylmethacrylat, Ethylmethacrylat, Benzylacrylat, Benzylmethacrylat, *sec*-Butylacrylat, *tert*-Butylacrylat, Phenylacrylat, Phenylmethacrylat, Isobornylacrylat, Isobornylmethacrylat, *tert*-Butylphenylacrylat, *tert*-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methylundecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N,N*-Dialkyl-substituierte Amide, wie beispielsweise *N,N*-Dimethylacrylamid, *N,N*-Dimethylmethacrylamid, *N*-Benzylacrylamide, *N*-Isopropylacrylamid, *N-tert*-Butylacrylamid, *N-tert*-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, *N-tert*-Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-*t*-butylperoxid, Cyclohexylsulfonylacetylperoxid, Diisopropylpercarbonat, *t*-Butylperoktoat, Benzpinacol. In einer sehr bevorzugten Vorgehensweise wird als radikalischer Initiator 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont) verwendet.

Als Lösungsmittel für die Herstellung der Poly(meth)acrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte $M_W$ der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol [die Angaben des mittleren Molekulargewichtes $M_W$ und der Polydisperistät PD in dieser Schrift beziehen sich auf die Bestimmung per Gelpermeationschromatographie]. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Das Polyacrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT-Verfahren hergestellt werden, sind in der US 6,765,078 B2 und US 6,720,399 B2 beschrieben. Auch über N-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind in den Schriften US 5,945,491 A, US 5,854,364 A und US 5,789,487 A beschrieben.

Die Monomere zur Herstellung der Poly(meth)acrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die erfindungsgemäß bevorzugten Poly(meth)acrylate lassen sich insbesondere dann vorteilhaft einsetzen, wenn ein hoher Masseauftrag in einer Schicht gefordert ist, da mit entsprechenden Beschichtungsverfahren ein nahezu beliebig hoher Masseauftrag, bevorzugt von mehr als 100 g/m$^2$, besonders bevorzugt von mehr als 200 g/m$^2$, möglich ist, und zwar insbesondere bei gleichzeitig homogener Vernetzung durch die Schicht hindurch.

Die erfindungsgemäß bevorzugten Poly(meth)acrylate können auch die Basis für die Haftklebemasse eines trägerlosen Klebebandes, eines sogenannten Transferklebebandes, bilden. Auch hier ist der nahezu beliebig hoch einstellbare Masseauftrag bei gleichzeitig homogener Vernetzung durch die Schicht hindurch besonders vorteilhaft. Bevorzugte Flächengewichte sind mehr als 10 g/m$^2$ bis 5000 g/m$^2$, besonders bevorzugt 100 g/m$^2$ bis 3000 g/m$^2$.

Es ist erfindungsgemäß auch möglich, dass das erfindungsgemäße Klebeband ein oder mehrere Polyacrylat(e), insbesondere ein oder mehrere thermisch vernetzbare(s) Polyacrylat(e), das/die mit einem oder mehreren anderen Polymeren abgemischt (geblendet) ist/sind, als Hauptbestandteil einer Schicht, insbesondere einer geschäumten Schicht, enthält. Hierzu eignen sich die bereits als neben Polyacrylaten bevorzugte Basispolymere der geschäumten Schicht aufgeführten Optionen Naturkautschuke, Synthesekautschuke, Vinylaromatenblockcopolymere, insbesondere Styrolblockcopolymere, EVA, Silikonkautschuke, Polyvinylether und Polyurethane. Es hat sich als zweckmäßig erwiesen, diese Polymere in granulierter oder andersartig zerkleinerter Form dem Polyacrylat, bevorzugt vor der eventuellen Zugabe eines thermischen Vernetzers, zuzusetzen. Die Herstellung der Polymerblends erfolgt bevorzugt in einem Extruder, insbesondere in einem Mehrwellenextruder oder in einem Planetwalzenmischer. Zur Stabilisierung von thermisch vernetzten Acrylathotmelts, insbesondere auch von Polymerblends aus thermisch vernetzten Acrylathotmelts und anderen Polymeren, kann es sinnvoll sein, das ausgeformte Material mit Elektronenbestrahlung geringer Dosen zu bestrahlen. Optional können zu diesem Zweck dem Polycrylat Vernetzungspromotoren wie di-, tri-, oder multifunktionelle Acrylate, Polyester und/oder Urethanacrylate zugesetzt werden.

In einer vorteilhaften Ausführungsform der Erfindung enthält das Klebeband mindestens eine geschäumte Schicht und eine auf die geschäumte Schicht kaschierte Haftklebeschicht. Die auf die geschäumte Schicht kaschierte Haftklebeschicht enthält bevorzugt mindestens ein Poly(meth)acrylat als Hauptbestandteil.

Bevorzugt ist mindestens eine der Schichten (Schaum oder Haftklebemasse), stärker bevorzugt beide Schichten, mit Corona- (mit Luft oder Stickstoff), Plasma- (Luft, Stickstoff oder andere reaktive Gase beziehungsweise reaktive, als Aerosol einsetzbare Verbindungen) oder Flammenvorbehandlungsmethoden vorbehandelt.

Es können alternativ andere beziehungsweise anders vorbehandelte Klebeschichten, also beispielsweise Haftklebeschichten und/oder hitzeaktivierbare Schichten auf der Basis anderer Polymere als Poly(meth)acrylate zu der geschäumten Schicht kaschiert werden. Geeignete Basispolymere sind Naturkautschuke, Synthesekautschuke, Acrylatblockcopolymere, Vinylaromatenblockcopolymere, insbesondere Styrolblockcopolymere, EVA, Polyolefine, Polyurethane, Polyvinylether und Silikone. Bevorzugt enthalten diese Schichten keine nennenswerten Anteile an migrierfähigen Bestandteilen, die mit dem Material der geschäumten Schicht so gut verträglich sich, dass sie in signifikanter Menge in die geschäumte Schicht diffundieren und dort die Eigenschaften verändern.

Statt beidseitig eine Haftklebeschicht auf die geschäumte Schicht zu kaschieren, kann auch mindestens einseitig eine Schmelzklebeschicht oder eine thermisch aktivierbare Klebeschicht zukaschiert werden. Die auf diese Weise erhaltenen asymmetrischen Klebebänder erlauben das Verkleben kritischer Substrate mit hoher Verklebungsfestigkeit. Ein derartiges Klebeband kann beispielsweise zur Befestigung von EPDM-Gummiprofilen an Fahrzeugen verwendet werden.

Sowohl geschäumte Schichten als auch - sofern nicht ohnehin damit identisch - Haftklebeschichten des erfindungsgemäßen Klebebandes können mindestens ein klebrig machendes Harz enthalten. Sieht der Produktaufbau des erfindungsgemäßen Klebebandes sowohl eine geschäumte Schicht als auch äußere Haftklebemassenschichten vor und enthalten diese die gleichen Basispolymere, so ist es von Vorteil, in allen diesen Schichten die gleichen Harze in gleicher Konzentration zu verwenden, um Veränderungen der Produkteigenschaften durch Harzmigration zwischen den Schichten zu vermeiden. Enthalten diese Schichten nicht das beziehungsweise die gleiche(n) Basispolymer(e), ist es von Vorteil, die Harze so auszuwählen, dass sie mit der jeweils anderen Schicht insofern unverträglich sind, als sie nicht in diese migrieren und somit keine Eigenschaftsveränderungen hervorrufen.

Als klebrig machende Harze sind insbesondere aliphatische, aromatische und/oder alkylaromatische Kohlenwasserstoffharze, Kohlenwasserstoffharze auf Basis reiner Monomere, hydrierte Kohlenwasserstoffharze, funktionelle Kohlenwasserstoffharze sowie Naturharze einsetzbar. Bevorzugt ist das klebrig machende Harz ausgewählt aus der Gruppe umfassend Pinen-, Inden- und Kolophoniumharze, deren disproportionierte, hydrierte, polymerisierte und/oder veresterte Derivate und Salze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Besonders bevorzugt ist das klebrig machende Harz ausgewählt aus der Gruppe umfassend Terpenphenolharze und Kolophoniumester.

In einer speziellen Ausführungsform enthält das erfindungsgemäße Klebeband eine geschäumte Schicht, die mindestens ein Poly(meth)acrylat als Hauptbestandteil enthält, und mindestens eine äußere Haftklebeschicht, die mindestens ein Vinylaromatenblockcopolymer als Hauptbestandteil enthält. In diesem Fall können in der äußeren Haftklebeschicht neben den zuvor erwähnten Harzen weitere Klebharze zur Erhöhung der Adhäsion eingesetzt werden. Das/die Klebharz(e) sollte(n) mit dem Elastomerblock (Weichblock) der Blockcopolymere verträglich sein. Bevorzugte Klebharze dieser Ausführungsform der Erfindung sind ausgewählt aus der Gruppe umfassend nicht hydrierte, partiell hydrierte und vollständig hydrierte Harze auf Basis von Kolophonium oder Kolophoniumderivaten, hydrierte Polymerisate des Dicyclopentadiens, nicht hydrierte, partiell, selektiv und vollständig hydrierte Kohlenwasserstoffharze auf Basis von C5-, C5/C9- oder C9-Monomerströmen, Polyterpenharze auf Basis von $\alpha$-Pinen und/oder ß-Pinen und/oder $\delta$-Limonen sowie Gemische der hier aufgeführten Harze, wobei die Klebharze nicht verträglich mit dem Acrylatpolymer der geschäumten Schicht sind. Besonders bevorzugt sind Polyterpenharze auf Basis von $\alpha$-Pinen und/oder ß-Pinen und/oder $\delta$-Limonen sowie Gemische davon. Die Klebemasseformulierung kann auch Klebharze enthalten, die bei Raumtemperatur flüssig sind.

Die im erfindungsgemäßen Klebeband eingesetzten Polymere, insbesondere die Poly(meth)acrylate, sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses, insbesondere des Extrusionsprozesses, kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten als Vernetzer, insbesondere den in der EP 1 791 922 A1 beschriebenen aliphatischen oder mit Aminen deaktivierten trimerisierten Isocyanaten.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt wird der thermische Vernetzer, beispielsweise das trimerisierte Isocyanat, zu 0,1 bis 5 Gew.-%, insbesondere zu 0,2 bis 1 Gew.-%, bezogen auf die Gesamtmenge des zu vernetzenden Polymers, eingesetzt.

Bevorzugt umfasst das erfindungsgemäße Klebeband mindestens ein mittels Epoxid vernetztes Polymer, besonders bevorzugt mindestens ein mittels mindestens einer epoxidgruppenhaltigen Substanz vernetztes Poly(meth) acrylat. Insbesondere sind alle Basispolymere der im erfindungsgemäßen Klebeband enthaltenen geschäumten Schichten und/oder Haftklebeschichten mittels mindestens einer epoxidgruppenhaltigen Substanz vernetzte Polymere. Ganz besonders bevorzugt sind alle Basispolymere der im erfindungsgemäßen Klebeband enthaltenen geschäumten Schichten und/oder Haftklebeschichten mittels mindestens einer epoxidgruppenhaltigen Substanz vernetzte Poly(meth)acrylate.

Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Car-bonsäuren oder einfach ungesättigten Carbonsäureestern ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Sehr geeignete Ether sind beispielsweise 1,4-Butandioldiglycidether, Polyglycerol-3-Glycidether, Cyclohexandimethanoldiglycidether, Glycerintriglycidether, Neopentylglykoldiglycidether, Pentaerythrittetraglycidether, 1,6-Hexandioldiglycidether), Polypropylenglykoldiglycidether, Trimethylolpropantriglycidether, Bisphenol-A-diglycidether und Bisphenol-F-diglycidether.

Besonders bevorzugt, insbesondere für Poly(meth)acrylate als zu vernetzende Polymere, ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungkinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine , die mit den Bausteinen der zu vernetzenden Polymere keine oder nur geringfüge Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielsweise Triethylamin, Triethylen-

diamin, Benzyldimethylamin, Dimethylamino-methylphenol, 2,4,6-Tris-(N,N-dimethylaminomethyl)-phenol, N,N'-Bis (3-(dimethyl-amino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino) ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Das erfindungsgemäße Klebeband kann einen oder mehrere Füllstoffe enthalten. Der oder die Füllstoff(e) kann/können in einer oder in mehreren Schichten des Klebebandes vorliegen.

So umfasst ein erfindungsgemäßes Klebeband bevorzugt eine geschäumte Schicht, die teil- oder vollexpandierte Mikroballons enthält. Bei Mikroballons handelt es sich um elastische Hohlkugeln, die eine thermoplastische Polymerhülle aufweisen; sie werden daher auch als expandierbare polymere Mikrosphären oder als Mikrohohlkugeln bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere niedere Alkane, beispielsweise Isobutan oder Isopentan geeignet, die als verflüssigtes Gas unter Druck in der Polymerhülle eingeschlossen sind. Durch ein physikalisches Einwirken auf die Mikroballons, beispielsweise durch eine Wärmeeinwirkung - insbesondere durch Wärmezufuhr oder -erzeugung, hervorgerufen zum Beispiel durch Ultraschall oder Mikrowellenstrahlung - erweicht einerseits die äußere Polymerhülle, gleichzeitig geht das in der Hülle befindliche flüssige Treibgas in seinen gasförmigen Zustand über. Bei einer bestimmten Paarung von Druck und Temperatur - im Rahmen dieser Schrift als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, wie zum Beispiel von der Firma Akzo Nobel die Expancel DU-Typen (dry unexpanded), welche sich im Wesentlichen über ihre Größe (6 bis 45 μm Durchmesser im unexpandierten Zustand) und ihre zur Expansion benötigten Starttemperatur (75°C bis 220°C) differenzieren.

Weiterhin sind unexpandierte Mikroballontypen auch als wässrige Dispersion mit einem Feststoff- beziehungsweise Mikroballonanteil von ca. 40 bis 45 Gew.-% erhältlich, darüber hinaus auch als polymergebundende Mikroballons (Masterbatche), zum Beispiel in Ethylen-Vinylacetat mit einer Mikroballonkonzentration von ca. 65 Gew.-%. Ferner sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung der für eine geschäumte Schicht des erfindungsgemäßen Klebebandes verwendeten Masse geeignet.

Besonders bevorzugt enthält die geschäumte Schicht Mikroballons, die im nicht expandierten Zustand bei 25 °C einen Durchmesser von 3 μm bis 40 μm, insbesondere von 5 μm bis 20 μm, und/oder nach Expansion einen Durchmesser von 10 μm bis 200 μm, insbesondere von 15 μm bis 90 μm, aufweisen.

Durch ihre flexible, thermoplastische Polymerschale weist eine derartige geschäumte Schicht des erfindungsgemäßen, eine solche Schicht enthaltenden Klebebandes eine höhere Spaltüberbrückungsfähigkeit auf als ein Schaum, der mit nicht expandierbaren, nicht polymeren Mikrohohlkugeln wie Glas- oder Keramikhohlkugeln gefüllt ist. Insbesondere einschichtige, geschäumte erfindungsgemäße Klebebänder eignen sich daher sehr gut zum Ausgleich von Fertigungstoleranzen, wie sie zum Beispiel bei Spritzgussteilen auftreten. Ferner kann ein solcher Schaum thermische Spannungen besser kompensieren.

Durch die Auswahl des thermoplastischen Harzes der Polymerschale können die mechanischen Eigenschaften des Schaums weiter beeinflusst werden. So ist es beispielsweise möglich, Schäume mit höherer Kohäsionsfestigkeit als mit der Polymermatrix allein herzustellen, obwohl der Schaum eine geringere Dichte als die Matrix aufweist. Weiterhin können typische Schaumeigenschaften wie die Anpassungsfähigkeit an raue Untergründe mit einer hohen Kohäsionsfestigkeit für PSA-Schäume kombiniert werden.

Bevorzugt enthält die geschäumte Schicht bis zu 30 Gew.-% Mikroballons, insbesondere zwischen 0,5 Gew.-% und 10 Gew.-%, jeweils bezogen auf die Gesamtmasse der geschäumten Schicht.

Die erfindungsgemäßen, eine geschäumte Schicht enthaltenden Klebebänder sind bevorzugt gekennzeichnet durch die weitgehende Abwesenheit von offenzelligen Hohlräumen, insbesondere von Lufteinschlüssen, in der/den geschäumten Schichten. Besonders bevorzugt weist die geschäumte Schicht einen Anteil von Hohlräumen ohne eigene Polymerhülle, also von offenzelligen Kavernen, von nicht mehr als 2 Vol-% auf, insbesondere von nicht mehr als 0,5 Vol.-%. Die geschäumte Schicht besteht somit bevorzugt aus einem geschlossenzelligen Schaum. Weiterhin besteht die geschäumte Schicht bevorzugt aus einem syntaktischen Schaum.

Optional kann das erfindungsgemäße Klebeband auch pulver- und/oder granulatförmige Füllstoffe, Farbstoffe und Pigmente, insbesondere auch abrasive und verstärkende Füllstoffe wie zum Beispiel Kreiden ($CaCO_3$), Titandioxide, Zinkoxide und Ruße zu Anteilen von 0,1 bis 15 Gew.-%, bezogen auf die Gesamtmasse des Klebebandes, enthalten. Sehr bevorzugt werden verschiedene Kreideformen als Füllstoff eingesetzt, wobei besonders bevorzugt Mikrosöhl-Kreide eingesetzt wird. Bei bevorzugten Anteilen der Füllstoffe von bis zu 10 Gew.-%, bezogen auf die Gesamtmasse des Klebebandes, verändern sich die klebtechnischen Eigenschaften (Scherfestigkeit bei RT, Sofortklebkraft auf Stahl und PE) durch den Füllstoffzusatz praktisch nicht.

Weiterhin können schwerentflammbare Füllstoffe wie beispielsweise Ammoniumpolyphosphat; elektrisch leitfähige Füllstoffe wie beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive wie beispielsweise Eisen-(III)-oxide; weitere Additive zur Volumenerhöhung, insbesondere zur Herstellung geschäumter Schichten beziehungsweise syntaktischer Schäume, wie beispielsweise Blähmittel, Glasvollkugeln, Glashohlkugeln, carbonisierte Mikrokugeln, phenolische Mikrohohlkugeln, Mikrokugeln aus anderen Materialien; Kieselsäure, Silicate, organisch nachwachsende Rohstoffe wie beispielsweise Holzmehl, organische und/oder anorganische Nanopartikel, Fasern; Alterungsschutzmittel, Lichtschutzmittel, Ozonschutzmittel und/oder Compoundierungsmittel in dem erfindungsgemäßen Klebeband enthalten sein. Als Alterungsschutzmittel können bevorzugt sowohl primäre, z.B. 4-Methoxyphenol oder Irganox® 1076, als auch sekundäre Alterungsschutzmittel, z.B. Irgafos® TNPP oder Irgafos® 168 der Firma BASF, gegebenenfalls auch in Kombination miteinander, eingesetzt werden. Als weitere Alterungsschutzmittel können Phenothiazin (C-Radikalfänger) sowie Hydrochinonmethylether in Gegenwart von Sauerstoff sowie Sauerstoff selbst eingesetzt werden.

Das erfindungsgemäße Klebeband kann auf einer oder beiden Seiten mit einem Releaseliner, im Folgenden auch kurz als "Liner" bezeichnet, zum Schutze der Klebmassenoberfläche während des Transports oder bei der Lagerung bedeckt sein. Der Liner umfasst bevorzugt ein Polyolefin, kann aber noch weitere zusätzliche Polymere beziehungsweise Polymerschichten aufweisen, welche zur Verbesserung der Temperaturstabilität, der Anschmiegsamkeit und/oder der Verformbarkeit beitragen. Die Verformbarkeit ist insbesondere wichtig bei Rundverklebungen, bei denen der Liner noch nicht entfernt werden soll.

Besonders bevorzugt ist der Releaseliner ein temperaturbeständiger Releaseliner. Darunter wird verstanden, dass der Liner Verarbeitungstemperaturen von bis zu 170 °C ohne wesentliche Einschränkung seiner Anwendungseigenschaften standhält.

Insbesondere bevorzugt ist ein Liner, der aus drei Schichten besteht, wobei die mittlere Schicht mindestens ein Polyolefin und die beiden äußeren Schichten ein LDPE (low density - polyethylene), insbesondere ein LDPE und ein olefinisches Elastomer, enthalten. Als olefinesches Elastomer eignen sich bevorzugt Ethylen-$\alpha$-Olefin-Copolymere mit einer Dichte von weniger als 900 kg/m$^3$.

Weiterhin kann der Liner Schichten umfassend PVC, PET, Glassine (Papier mit einer Polyvinylalkoholbeschichtung), HDPE (high density - polyethylene) und Papier enthalten. Das Trägermaterial des Liners kann - sofern es an sich nicht schon Trenneigenschaften aufweist - mit einer zusätzlichen Schicht, zum Beispiel aus Silikon, beschichtet sein.

Der Liner hat bevorzugt eine Dicke von 127 $\mu$m bis 254 $\mu$m.

Die erfindungsgemäßen Klebebänder, insbesondere als Transfertapes oder dreischichtige Klebebänder, können in einer Vielzahl von Anwendungen eingesetzt werden, so zum Beispiel in der Bauindustrie, in der Elektronikindustrie, beispielsweise in Bildschirmverklebungen, im Heimwerkerbereich, in der Autoindustrie, im Schiffs-, Boots- und Eisenbahnbau, für Haushaltsgeräte, Möbel und dergleichen. Vorteilhafte Anwendungen sind beispielsweise das Verkleben von Leisten und Emblemen in den vorgenannten Bereichen, das Verkleben von Versteifungsprofilen bei Fahrstühlen, das Verkleben von Bauteilen und Produkten in der Solarindustrie, die Rahmenverklebung bei elektronischen Konsumgütern, wie Fernsehern und dergleichen, Außenverklebungen bei Automobilen (beispielsweise Stoßfänger) sowie Verklebungen bei der Schilderherstellung.

Im Bauwesen sind beispielsweise Anwendungen als Isolierbänder, Korrosionsschutzbänder, Aluminiumklebebänder, Bauspezialklebebänder, zum Beispiel Dampfsperren und Montageklebebänder, von Bedeutung.

Ein weiterer Gegenstand der Erfindung ist eine Vorrichtung, die ein einseitig mit einem doppelseitigen erfindungsgemäßen Klebeband verklebtes Bauteil und einen auf der nicht mit dem Bauteil verbundenen Seite des Klebebandes aufgebrachten hitzebeständigen Releaseliner umfasst.

Beispiele

Sofern im Einzelnen nichts anderes angegeben ist oder sich ergibt, gelten Angaben von Werten für Standardbedingungen (25 °C, 101325 Pa). Ferner gelten nachfolgend beschriebene Probenvorbereitungen und Messungen gemäß den folgenden Methoden, sofern nichts Gegenteiliges angegeben ist, als unter Standardbedingungen (25 °C, 101325 Pa) durchgeführt.

Testmethoden

Dynamische Scherkraft:

Zwei Stahlplatten wurden mit Aceton gereinigt. Bei den mit "mP" gekennzeichneten Versuchen wurde mit einem fusselfreien Tuch eine dünne Schicht des Primers 60150 der Firma tesa jeweils einseitig aufgetragen. Zwischen den - gegebenenfalls mit Primer beschichteten - Seiten der Stahlplatten wurde dann das zu prüfende doppelseitige Klebeband (Probengröße = 25 $\times$ 25mm) blasenfrei verklebt und für 1 min mit 0,1 kN/cm$^2$ verpresst. Die Probenkörper wurden bei den jeweils angegebenen Temperaturen für die jeweils angegebene Zeit gelagert und anschließend auf Raumtemperatur gebracht. Zur Prüfung wurde der betreffende Probenkörper mit einer Geschwindigkeit von. 50 mm/min in Maschinenrichtung des Klebebandes auseinander gezogen und die dabei gemessene Maximalkraft sowie die erzielte Elongation als Ergebnis angegeben.

Statische Glasübergangstemperatur Tg:

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

Molekulargewichte:

Die Bestimmung des mittleren Molekulargewichtes $M_W$ und der Polydisperistät D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 $\mu$m, 103 Å (10-7 m), ID 8,0 mm x 50 mm verwendet. Zur Auftrennung wurden die Säulen PSS-SDV, 5 $\mu$m, 103 Å (10-7 m), 105 Å (10-5 m) und 106 Å (10-4 m) mit jeweils ID 8,0 mm $\times$ 300 mm eingesetzt. Die Probenkonzentration betrug 4 g/L, die Durchflussmenge 1,0 mL pro Minute. Es wurde gegen PMMA-Standards gemessen.

K-Wert (nach FIKENTSCHER):

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt *(*Polymer 1967, 8, 381 ff.).

Feststoffgehalt:

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

Beispiele

Herstellung Basispolymer Ac 1:

Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN), gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben und nach 4 h wurde mit 10 kg Aceton/Isopropanol-Gemisch (94:6) verdünnt.

Nach 5 h sowie nach 7 h wurde jeweils mit 150 g Bis-(4-*tert*-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde getrocknet. Das resultierende Polyacrylat hatte einen K-Wert von 58,9, ein mittleres Molekulargewicht von Mw = 748.000 g/mol, eine Polydispersität von D (Mw/Mn) = 8,9 und eine statische Glasübergangstemperatur von Tg = - 35,2 °C.

Herstellung Basispolymer Ac2

Ein für radikalische Polymerisationen konventioneller Reaktor wurde mit 32,0 kg 2-Ethylhexylacrylat, 64,5 kg Butylacrylat, 3,5 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-*tert*-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-*tert*-butylcyclohexyl)peroxydicarbonat, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 74,9, ein mittleres Molekulargewicht von Mw = 1 368 000 g/mol, eine Polydispersität von D (Mw/Mn) = 17,11 und eine statische Glasübergangstemperatur von Tg = - 37.4 °C.

Polyacrylathaftkleber Ac-PSA:

Ein für radikalische Polymerisationen konventioneller 200 L-Glasreaktor wurde mit 9,6 kg Acrylsäure, 20,0 kg Butylacrylat, 50,4 kg 2-Ethylhexylacrylat und 53,4 kg Aceton/ Benzin 60/95 (1:1) befüllt. Nach 45minütiger Durchleitung von Stickstoffgas unter Rühren wurde der Reaktor auf 58 °C hochgeheizt und 60 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 60 g AIBN hinzugegeben. Nach 4 h und 8 h wurde mit jeweils 20,0 kg Aceton/ Benzin 60/95 (1:1) Gemisch verdünnt. Zur Reduktion der Restinitiatoren wurden nach 8 h und nach 10 h jeweils 180 g Bis-(4-*tert*-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% Uvacure® 1500 abgemischt, auf einen Feststoffgehalt von 30 % mit Aceton verdünnt und dann aus Lösung auf eine silikonisierte Trennfolie (50 $\mu$m Polyester) bzw. auf eine 23 $\mu$m dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 50 g/m$^2$.

Herstellung von Mikroballonmischungen:

Die Mikroballons werden in ein Behältnis gegeben, in welches eine Ruß-Wasser-Dispersion vorgelegt wurde. In einem Planetenrührwerk der Firma pc-Laborsystem wird bei einem Druck von 5 mbar und einer Drehzahl von 600 rpm für 30 min gerührt.

Verfahren 1: Aufkonzentration / Herstellung der Haftkleber:

Die Acrylatcopolymere (Basispolymere Ac1 und Ac2) wurden mittels Einschneckenextruder (Aufkonzentrationsextruder, Berstorff GmbH, Deutschland) weitestgehend vom Lösemittel befreit. Exemplarisch sind hier die Parameter der Aufkonzentration des Basispolymeren Ac1 dargestellt. Die Drehzahl der Schnecke betrug 150 U/min, der Motorstrom 15 A, es wurde ein Durchsatz von 58,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Polymers liegt bei ca. 115 °C. Der Feststoffgehalt betrug nach diesem Aufkonzentrationsschritt 99,8%. Die Masse Ac1 wurde mittels eines Walzenkalanders zu einer Bahn geformt.

Herstellung geschäumte Masse:

Das aufkonzentrierte Basispolymer Ac2 wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert (es wurde insbesondere ein PWE mit vier unabhängig voneinander heizbaren Modulen $T_1$, $T_2$, $T_3$, $T_4$ eingesetzt). Über eine Dosieröffnung wurde nun das geschmolzene Harz zugegeben. Weiterhin besteht die Möglichkeit, zusätzliche Additive oder Füllstoffe, wie z.B. Farbpasten, über weitere vorhandene Dosierstellen zuzuführen. Der Vernetzer wurde hinzugefügt, alle Komponenten wurden zu einer homogenen Polymerschmelze gemischt. Mittels einer Schmelzepumpe und eines beheizbaren Schlauches wurde die Polymerschmelze in einen Doppelschneckenextruder (Firma Berstorf) überführt, und die Beschleunigerkomponete wurde hinzugefügt. Anschließend wurde die gesamte Mischung in einem Vakuumdom bei einem Druck von 175 mbar von allen Gaseinschlüssen befreit (Kriterium für Gasfreiheit siehe oben). Im Anschluss an die Vakuumzone befand sich auf der Schnecke ein Blister, welcher einen Druckaufbau in dem darauf folgenden Segment ermöglichte. Durch geeignete Steuerung der Extruderdrehzahl und der Schmelzepumpe wurde in dem Segment zwischen Blister und Schmelzepumpe ein Druck von größer 8 bar aufgebaut, an einer weiteren Dosierstelle 35 die Mikroballonmischung (Mikroballons eingebettet in das Dispergierhilfsmittel) hinzugefügt und mittels eines Mischelements homogen in die Vormischung eingearbeitet. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsarme, insbesondere scherungsfreie, Abkühlung der Polymermasse erfolgte. Es entstand eine geschäumte Selbstklebemasse, welche anschließend mittels eines Walzenkalanders bahnförmig ausgeformt wurde.

Herstellung doppelseitiger Klebebänder:

Jeweils eine Schicht der Polyacrylathaftklebemasse (Ac-PSA, 50 μm Schichtdicke) wurde auf die Ober- und Unterseite der zu einer Bahn ausgeformten, aus Ac1 bzw. Ac2 erhaltenen Selbstklebemassen aufkaschiert, wobei die miteinander in Kontakt kommenden Flächen zuvor Corona-behandelt wurden. An den erhaltenen doppelseitigen Klebebändern wurden wie oben beschrieben die maximale dynamische Scherkraft ermittelt und die maximale Elongation nach Lagerung ermittelt.

In den Vergleichsversuchen wurden Klebebänder des Standes der Technik verwendet. Die Ergebnisse sind in Tabelle 1 dargestellt.

Tabelle 1: Testergebnisse

| Beispiel Nr. | Schichtaufbau | Lagerzeit (Tage) | Temperatur (°C) | Dyn. Scherkraft (N/cm$^2$) | Elongation (auf % der Ausgangslänge) |
|---|---|---|---|---|---|
| 1 | Ac-PSA / Ac1 (900 μm) / Ac-PSA | 60 | 120 | 64,2 | 339,6 |
| | | 98 | 120 | 111,5 | 382,3 |
| | | 154 | 120 | 133,2 | 366,3 |
| | | 212 | 120 | 156,6 | 365,5 |
| | | | | | |
| 2 | Ac-PSA / Ac1 (900 μm) / Ac-PSA (mP) | 60 | 120 | 75,3 | 374,9 |
| | | 98 | 120 | 120,0 | 407,5 |
| | | 154 | 120 | 178,8 | 440,6 |
| | | 210 | 120 | 178,4 | 415,5 |
| | | 154 | 150 | 212,7 | 346,0 |
| | | | | | |
| 3 | Ac-PSA / Ac2 geschäumt (900 μm)/ Ac-PSA | 60 | 120 | 57,3 | 350,3 |
| | | 98 | 120 | 63,9 | 349,1 |
| | | 154 | 120 | 71,1 | 345,4 |
| | | 210 | 120 | 70,2 | 330,9 |
| | | 210 | 150 | 38,2 | 318,7 |
| | | | | | |

(fortgesetzt)

| Beispiel Nr. | Schichtaufbau | Lagerzeit (Tage) | Temperatur (°C) | Dyn. Scherkraft (N/cm$^2$) | Elongation (auf % der Ausgangslänge) |
|---|---|---|---|---|---|
| 4 | Ac-PSA / Ac2 geschäumt (900 μm)/ Ac-PSA (mP) | 60 | 120 | 58,7 | 351,4 |
|  |  | 98 | 120 | 62,9 | 344,7 |
|  |  | 154 | 120 | 70,7 | 339,2 |
|  |  | 210 | 120 | 71,0 | 328,2 |
|  |  | 210 | 150 | 36,1 | 302,2 |
|  |  |  |  |  |  |
| 5 (Vgl.) | Einschichtiges, ungeschäumtes Polyacrylat-Klebeband, (3M™ VHB™ 4910) | 60 | 120 | 120,3 | 191,7 |
|  |  | 98 | 120 | 146,4 | 219,4 |
|  |  | 154 | 120 | 170,6 | 230,1 |
|  |  | 60 | 150 | 137,9 | 180,1 |
|  |  | 98 | 150 | 125,7 | 144,5 |
|  |  |  |  |  |  |
| 6 (Vgl.) | Einschichtiges, ungeschäumtes Polyacrylat-Klebeband, (3M™ VHB™ 4910; mP) | 60 | 120 | 152,4 | 199,8 |
|  |  | 98 | 120 | 168,3 | 251,4 |
|  |  | 154 | 120 | 141,6 | 170,2 |
|  |  | 210 | 120 | 201,3 | 262,6 |
|  |  | 60 | 150 | 122,3 | 131,5 |
|  |  | 98 | 150 | 126,9 | 137,6 |
|  |  |  |  |  |  |
| 7 (Vgl.) | Ac-Haftklebemasse/ mit Glashohlkugeln geschäumter Ac-Kern/ Ac-Haftklebemasse (3M™ VHB™ 4991) | 60 | 120 | 63,5 | 265,7 |
|  |  | 98 | 120 | 64,1 | 181,8 |
|  |  | 154 | 120 | 69,4 | 142,5 |
|  |  | 210 | 120 | 67,1 | 118,9 |
| 8 (Vgl.) | Ac-Haftklebemasse/mit Glashohlkugeln geschäumter Ac-Kern/Ac-Haftklebemasse (3M™ VHB™ 4991; mP) | 60 | 120 | 59,8 | 244,3 |
|  |  | 98 | 120 | 65,1 | 174,7 |
|  |  | 154 | 120 | 72,4 | 132,0 |
|  |  | 210 | 120 | 78,8 | 125,1 |
|  |  | 60 | 150 | 52,9 | 170,6 |
|  |  | 98 | 150 | 58,0 | 157,6 |

**Patentansprüche**

1. Klebeband mit einer Dicke von mindestens 150 μm, **dadurch gekennzeichnet, dass** das Klebeband nach Lagerung bei 120 - 150°C über 60 bis 210 Tage eine Dehnbarkeit in Maschinenrichtung auf mindestens das Dreifache seiner ursprünglichen Ausdehnung aufweist.

2. Klebeband gemäß Anspruch 1, **dadurch gekennzeichnet, dass** das Klebeband mindestens ein thermisch vernetztes Polymer umfasst.

**3.** Klebeband gemäß mindestens einem der vorstehenden Ansprüche, **dadurch gekennzeichnet, dass** das Klebeband mindestens eine Haftklebeschicht enthaltend mindestens ein Polymer, ausgewählt aus der Gruppe bestehend aus Poly(meth)acrylaten, Synthesekautschuken, Vinylaromatenblockcopolymeren, Polyolefinen und Mischungen aus zwei oder mehreren der vorstehenden Polymere, umfasst.

**4.** Klebeband gemäß mindestens einem der vorstehenden Ansprüche, **dadurch gekennzeichnet, dass** das Klebeband mindestens eine Haftklebeschicht enthaltend mindestens ein Poly(meth)acrylat umfasst.

**5.** Klebeband gemäß mindestens einem der vorstehenden Ansprüche, **dadurch gekennzeichnet, dass** die Dicke des Klebebandes 200 bis 5500 μm beträgt.

**6.** Klebeband gemäß mindestens einem der vorstehenden Ansprüche, **dadurch gekennzeichnet, dass** das Klebeband mindestens eine geschäumte Schicht umfasst.

**7.** Klebeband gemäß Anspruch 6, **dadurch gekennzeichnet, dass** die geschäumte Schicht aus einem geschlossenzelligen Schaum besteht.

**8.** Klebeband gemäß mindestens einem der Ansprüche 6 und 7, **dadurch gekennzeichnet, dass** die geschäumte Schicht aus einem syntaktischen Schaum besteht.

**9.** Klebeband gemäß mindestens einem der Ansprüche 6 bis 8, **dadurch gekennzeichnet, dass** mindestens ein Basispolymer der geschäumten Schicht ein Poly(meth)acrylat ist.

**10.** Vorrichtung, umfassend ein einseitig mit einem doppelseitigen Klebeband gemäß mindestens einem der vorstehenden Ansprüche verklebtes Bauteil und einen auf der nicht mit dem Bauteil verbundenen Seite des Klebebandes aufgebrachten hitzebeständigen Releaseliner.

**IN DER BESCHREIBUNG AUFGEFÜHRTE DOKUMENTE**

**In der Beschreibung aufgeführte Patentdokumente**

- WO 2006027387 A1
- EP 1978069 A1
- US 6765078 B2
- US 6720399 B2
- EP 1311555 B1
- US 5945491 A
- US 5854364 A
- US 5789487 A
- EP 1791922 A1

**In der Beschreibung aufgeführte Nicht-Patentliteratur**

- **CHANG.** Handbook of Pressure-Sensitive Adhesives and Products - Fundamentals of pressure sensitivity. CRC Press, 2009
- **T.G. FOX.** *Bull. Am. Phys. Soc.,* 1956, vol. 1, 123
- *Polymer,* 1967, vol. 8, 381 ff